(19) Europäisches Patentamt / European Patent Office / Office européen des brevets

(11) **EP 3 782 270 B1**

(12) **FASCICULE DE BREVET EUROPEEN**

(45) Date de publication et mention de la délivrance du brevet:
**11.01.2023 Bulletin 2023/02**

(21) Numéro de dépôt: **19723467.7**

(22) Date de dépôt: **12.04.2019**

(51) Classification Internationale des Brevets (IPC):
*H02K 19/20* (2006.01)     *H02K 19/10* (2006.01)

(52) Classification Coopérative des Brevets (CPC):
**H02K 19/20; H02K 19/103**

(86) Numéro de dépôt international:
**PCT/FR2019/050862**

(87) Numéro de publication internationale:
**WO 2019/202241 (24.10.2019 Gazette 2019/43)**

(54) **MACHINE ÉLECTRIQUE SYNCHRONE**

ELEKTRISCHE SYNCHRONMASCHINE

SYNCHRONOUS ELECTRICAL MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.04.2018 FR 1853381**
**19.12.2018 FR 1873356**

(43) Date de publication de la demande:
**24.02.2021 Bulletin 2021/08**

(73) Titulaire: **Safran Electrical & Power**
**31702 Blagnac Cedex (FR)**

(72) Inventeur: **BOURGEOIS, Lionel**
**31702 BLAGNAC Cedex (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**WO-A1-2016/138159     WO-A2-2012/085438**
**DE-A1- 19 547 016     FR-A1- 2 406 333**
**US-A- 3 473 061**

**Description**

**Domaine technique de l'invention**

L'invention concerne le domaine des machines électriques, en particulier des machines électriques synchrones pouvant à la fois servir de moteur électrique ou de générateur électrique. En particulier, l'invention concerne une machine électrique synchrone sans balais et sans aimants.

**Arrière-plan technique**

L'état de la technique comporte notamment les documents WO-A2-2012/085438, US-A-3 473 061, WO-A1-2016/138159, DE-A1-195 47 016 et FR-A1-2 406 333.

Les machines électriques synchrones à flux d'excitation rotorique sont actuellement divisées en deux catégories principales : les machines à aimants permanents et les machines à balais.

Les machines à aimants permanents ont l'avantage de pouvoir atteindre des densités de couple élevées et d'avoir des pertes rotoriques faibles mais elles ont l'inconvénient de devoir incorporer des aimants chers à l'achat et qui compliquent le processus de fabrication.

De plus, l'évolution de la technologie et ses conséquences sur le marché du grand public génère une consommation exponentielle de certaines terres rares qui peuvent engendrer une hausse du coût des aimants utilisant ces terres rares (aimants Samarium Cobalt ou Néodyme Fer Bore par exemple), voire une pénurie.

Les machines à balais n'ont pas les inconvénients liés aux aimants mais n'ont pas non plus leurs avantages. En outre, le système de balais nécessite des opérations de maintenance liées à l'usure mécanique des balais (changement des balais) qui s'avère contraignantes pour l'utilisateur.

Pour éviter ces inconvénients, des solutions ont été proposées.

On peut citer par exemple les générateurs multi-étages qui utilisent un « transformateur tournant » qui génère au rotor, sur un premier étage, un signal électrique alternatif, qui est ensuite redressé par un pont de diode tournant (second étage) qui alimente des bobines fixées sur des saillances magnétiques rotoriques (électro-aimants formant l'excitation principale) qui représentent le troisième étage. Ces machines sont souvent des générateurs, appelés générateurs tri-étagés qui ont une grande complexité du fait du transformateur et du redresseur tournant.

Les inventeurs ont donc cherché d'autres solutions pour bénéficier des avantages des machines à aimants permanents sans les inconvénients des balais ou équivalent nécessitant un contact tournant mécanique pour la transmission d'électricité.

**Résumé de l'invention**

Pour ce faire, l'invention concerne une machine électrique synchrone sans balais et sans aimants, configurée pour entrainer en rotation un élément rotatif autour d'un axe de rotation de la machine électrique ou pour générer de l'énergie électrique à partir de l'énergie mécanique transmise par ledit élément rotatif, caractérisée en ce qu'elle comprend :

- un stator disposé autour de l'axe de rotation de la machine électrique, comprenant un anneau s'étendant selon un plan préférentiel perpendiculaire audit axe de rotation et comprenant un bobinage et une denture comprenant des dents s'étendant parallèlement à l'axe de rotation à partir de l'anneau, ledit bobinage étant enroulé autour de la denture selon le plan préférentiel et la denture délimitant une zone intérieure du stator autour de l'axe de rotation,
- un rotor, comprenant une première partie s'étendant selon p premières directions privilégiées parallèles au plan préférentiel, une deuxième partie s'étendant selon p deuxièmes directions privilégiées décalées angulairement de $\pi/p$ par rapport aux premières directions privilégiées de la première partie et parallèles au plan préférentiel, et une partie intermédiaire reliant la première partie à la deuxième partie, le rotor étant disposé de sorte à ce qu'au moins la deuxième partie et la partie intermédiaire, s'étendant parallèlement à l'axe de rotation, soient dans la zone intérieure du stator et de sorte à ce que la deuxième partie se trouve du côté de l'anneau, et
- une bobine d'excitation du rotor, fixe par rapport au stator, alimentée par un courant électrique continu, disposée autour de la partie intermédiaire du rotor et configurée pour générer un flux magnétique dans le rotor par induction magnétique, de sorte que la première partie du rotor constitue p pôles magnétiques nord du rotor et la deuxième partie du rotor constitue p pôles magnétiques sud du rotor.

Une machine électrique selon l'invention permet donc de polariser le rotor sans nécessiter d'aimants permanents ou de balais, grâce à la bobine d'excitation (aussi appelée bobine d'induction) située au niveau de la partie intermédiaire du rotor.

La bobine d'excitation du rotor est fixe par rapport au stator, ce qui limite la complexité par rapport aux solutions de l'art antérieur avec pièces tournantes (générateur tri-étagé notamment). L'alimentation de la bobine d'excitation est facilitée car la bobine d'excitation n'entre pas dans la zone de mouvement des pôles nord et sud du rotor (respectivement la première partie du rotor et la deuxième partie du rotor). La bobine d'excitation crée ainsi les pôles magnétiques par induction magnétique au niveau de la partie intermédiaire sans provoquer d'interaction mécanique avec les pôles magnétiques mobiles. La bobine peut être simple, par exemple uniquement une bobine concentrique, alimenter en courant continu et présenter ainsi un coût réduit.

Le rotor est dit « froid » car aucun bobinage ne lui est attaché et il n'y a donc pas d'échauffement par conduction mais seulement du fait du rayonnement provenant de la bobine d'excitation. Ce rayonnement est d'autant plus faible que l'entrefer avec la bobine d'excitation est grand. Le flux traversant le rotor est continu car créé par la bobine d'excitation alimentée en continu, ce qui entraine l'absence de pertes par hystérésis et courants de Foucault, sauf aux extrémités en regard du stator du fait des variations potentielles de réluctance. Le rotor est en outre décentré par rapport au bobinage du stator situé au niveau des dents à proximité de l'anneau et le rotor ne reçoit pas de calories rayonnées par le bobinage du stator. Pour toutes ces raisons, la durée de vie des composants est améliorée, en particulier la durée de vie de roulements de la machine électrique.

L'absence de balais permet d'augmenter la fiabilité et réduire les coûts de maintenance. L'absence d'aimants permet de réduire les coûts et la dépendance aux terres rares.

Enfin, la disposition des dentures du stator, parallèles à l'axe de rotation, permet de simplifier la mise en place du bobinage du stator lors de la fabrication, en insérant simplement le bobinage par la face du stator comprenant les extrémités libres des dentures opposées à l'anneau du stator.

La machine électrique peut aussi bien fonctionner en tant que moteur que générateur. En fonctionnement générateur, le rotor peut être directement fixé à l'élément rotatif d'entrainement mécanique, et le stator fixé à la partie fixe de l'élément d'entrainement rotatif. Dans ce cas, la machine électrique peut fonctionner sans roulement entre le rotor et le stator : le rotor tourne dans le stator sans nécessiter de roulement. C'est par exemple le cas si le rotor est fixé sur l'axe de sortie d'un réducteur et le stator fixé sur le carter du réducteur.

Suivant une caractéristique de l'invention, la machine électrique comprend un dispositif électronique intégré qui est disposé à l'intérieur du stator. Une telle configuration est facile à mettre en œuvre puisqu'elle permet de combler l'espace non occupée à l'intérieur du stator. Cela permet de ne pas allonger la machine électrique ni d'augmenter son diamètre contrairement à d'autres solutions de l'art antérieur qui prévoient l'agencement d'éléments électroniques à l'arrière de la machine électrique ou autour de celle-ci. La machine électrique est ainsi compacte.

Avantageusement, mais non limitativement, le dispositif électronique intégré est agencé dans la zone intérieure du stator et entre le rotor et une face arrière de l'anneau du stator suivant l'axe de rotation.

Suivant une autre caractéristique, le stator est feuilleté et réalisée d'une seule pièce de manière à limiter les pertes de courant de Foucault.

De manière avantageuse, mais non limitativement, le stator comprend une pluralité de feuilles de tôle ferromagnétique disposées les unes au-dessus des autres suivant un axe radial perpendiculaire à l'axe de rotation.

Suivant une caractéristique de l'invention, le stator feuilleté est réalisé à partir d'une unique bande de tôle ferromagnétique.

Suivant une autre caractéristique, la machine électrique comprend un premier boîtier comprenant un premier fluide de refroidissement et dans lequel est/sont installé(s) le bobinage de stator et/ou le dispositif électronique intégré. Un tel agencement permet de refroidir plus efficacement à cœur le bobinage de stator et/ou le dispositif électronique intégré. Les gradients de température sont réduits, ce qui implique une température interne plus homogène et augmente la fiabilité de la machine électrique. De plus, le fait de remplir le premier boîtier d'un fluide de refroidissement permet d'amortir les vibrations.

Suivant une autre caractéristique, la machine électrique comprend un deuxième boîtier comprenant un deuxième fluide de refroidissement, la bobine d'excitation étant agencée à l'intérieur de ce deuxième boîtier. Comme expliqué précédemment, l'installation de la bobine d'excitation dans un carter rempli d'un fluide de refroidissement permet de la refroidir à cœur plus efficacement, de réduire les gradients de températures pour augmenter les performances de la machine électrique, d'amortir les vibrations lors du fonctionnement de la machine électrique et d'éviter les risques de feu.

Avantageusement, mais non limitativement, le premier et/ou le deuxième fluide de refroidissement comprend une huile. L'huile joue un rôle d'amortisseur de manière efficace. Par ailleurs, les composants qui sont agencés dans le premier boîtier et/ou le deuxième boîtier ne sont pas soumis à l'humidité et tout l'espace du ce premier et/ou deuxième boîtier étant rempli d'huile, le risque de feu est limité.

Suivant un autre mode de réalisation de l'invention, la machine électrique comprend un carter dans lequel sont logés au moins le rotor, la bobine d'excitation montée autour de la partie intermédiaire du rotor et un arbre d'entraînement s'étendant suivant l'axe de rotation, l'arbre d'entraînement comprenant une première extrémité qui est couplée à un fond du carter. Un tel agencement permet de libérer de l'espace pour l'agencement du dispositif électronique intégré à l'intérieur du stator puisque l'arbre d'entraînement (qui est destiné à être couplé à l'élément rotatif) ne s'étend pas à travers le l'anneau du stator. L'arbre d'entraînement s'arrête au niveau du fond du carter.

Le dispositif électronique intégré est pourvue d'un alésage destiné au passage d'un élément rotatif.

Suivant une autre caractéristique de ce mode de réalisation, l'arbre d'entraînement est monté en rotation dans le carter et est guidé en rotation via des paliers de guidage en rotation.

Suivant une caractéristique, le carter comprend des rainures ou des logements destinés à recevoir chacun au moins en partie l'extrémité libre de dents du stator de sorte à raidir l'ensemble.

Suivant une autre caractéristique, la machine comprend un flasque configuré pour fermer le carter, le flasque comprenant des logements destinés à recevoir chacun au moins en partie l'extrémité libre des dents du stator de sorte à raidir l'ensemble.

Avantageusement et selon l'invention, la longueur maximale de la première partie du rotor est supérieure au diamètre de la zone intérieure du stator, et la première partie du rotor est extérieure à la zone intérieure du rotor, en regard des extrémités des dents de la denture du stator, opposées à l'anneau.

Selon cet aspect de l'invention, la première partie du rotor fonctionnant comme succession de pôles magnétiques de même polarité est positionnée axialement par rapport au circuit magnétique formé par le stator tandis que la deuxième partie du rotor fonctionnant comme succession de pôles magnétiques de polarité opposée à la première partie est positionnée radialement par rapport au circuit magnétique formé par le stator.

Avantageusement et selon l'invention, la longueur maximale de la première partie du rotor est inférieure au diamètre de la zone intérieure du stator, et la première partie du rotor est disposée dans la zone intérieure du stator.

Selon cet aspect de l'invention, l'intégralité du rotor est disposée dans la zone intérieure du stator et les deux successions de pôles magnétiques du rotor sont positionnées radialement par rapport au circuit magnétique formé par le stator.

Avantageusement et selon l'invention, la première partie du rotor et la deuxième partie du rotor ont la forme d'un cylindre droit ayant pour base un disque tronqué de p segments décalés angulairement de $2\pi/p$, formés par des cordes distinctes parallèles et symétriques par rapport au centre du disque, ledit cylindre comprenant un alésage autour du centre du disque destiné à recevoir l'élément rotatif.

Selon cet aspect de l'invention, les parties de rotor ont une longueur maximale égale au diamètre maximal du disque tronqué formant la base du cylindre et chaque segment les composant a une largeur égale à la distance entre les deux cordes de ce segment. La direction privilégiée de chaque segment de chaque partie de rotor est parallèle aux deux cordes de ce segment.

Les parties de rotor peuvent être directement fabriquées à partir d'un cylindre de révolution droit ayant pour base le disque complet par usinage des 2p segments.

La forme des rotors est particulièrement adaptée pour des pièces en rotation et s'adapte parfaitement au stator en forme d'anneau pour la circulation du flux magnétique, en minimisant l'entrefer sur les parties formant les pôles magnétiques.

Avantageusement et selon l'invention, la partie intermédiaire a la forme d'un cylindre de révolution.

Selon cet aspect de l'invention, la partie intermédiaire est optimisée pour recevoir l'excitation transmise par la bobine d'excitation en forme d'anneau autour de la partie intermédiaire. En outre, la partie intermédiaire ne présente pas de balourd lors de la rotation. Le cylindre est creux pour permettre l'introduction de l'élément rotatif.

Avantageusement et selon l'invention, la machine électrique comprend un générateur de tension continu d'alimentation de la bobine d'excitation, ledit générateur de tension continu étant configuré pour délivrer un courant continu de valeur de courant réglable.

Selon cet aspect de l'invention, une modification de la valeur du courant continu d'alimentation de la bobine d'excitation permet le réglage du flux magnétique circulant dans la machine. En particulier, cela permet le réglage du couple délivré par la machine électrique lorsqu'elle fonctionne en mode moteur. Cela permet également un « défluxage » simple lorsqu'elle fonctionne en mode moteur et qu'il est nécessaire de la faire monter en vitesse en réduisant sa force électro-motrice.

Cela permet aussi le réglage simple de la tension de sortie aux bornes du bobinage du stator lorsqu'elle fonctionne en mode générateur.

Avantageusement et selon l'invention, le bobinage du stator comprend un nombre multiple de phases réparties sur la denture du stator, en particulier trois phases.

Selon cet aspect de l'invention, le stator est équipé d'un bobinage triphasé standard pour le fonctionnement de la machine électrique.

Selon d'autres variantes de l'invention, le bobinage peut comprendre un autre nombre de phases selon l'application souhaitée.

L'invention concerne également une machine électrique caractérisée en combinaison par tout ou partie des caractéristiques mentionnées ci-dessus ou ci-après.

L'invention concerne encore un procédé de réalisation d'un stator d'une machine électrique présentant l'une quelconque des caractéristiques précédentes, le procédé étant caractérisé en ce qu'il comprend les étapes suivantes :

- fourniture d'une bande de tôle ferromagnétique comprenant une largeur L prédéterminée suivant une première direction, la largeur L étant mesurée entre un premier côté et un deuxième côté de la bande de tôle ferromagnétique,
- réalisation d'une pluralité d'encoches par découpure de manière à former des pattes, et
- enroulage de la bande de tôle autour d'un axe d'enroulement de sorte que plusieurs pattes soit superposées suivant un axe radial perpendiculaire à l'axe d'enroulement.

Avantageusement, mais non limitativement, la première direction est parallèle à l'axe d'enroulement.

Suivant ce procédé, l'écart entre chaque encoche successive est définie par la formule :

[Math 1]

$$X + n.e$$

où X est la distance de la première encoche,
n est un nombre entier allant de 0 à K-2 et K correspond au nombre d'encoches.

Suivant ce procédé, e est calculé suivant la formule :

[Math 2]

$$R(\theta) = \left(\frac{e}{2p}\right).\theta + R_i$$

avec Ri est le rayon interne du stator.

L'invention concerne également un procédé de montage d'une machine électrique présentant l'une quelconque des caractéristiques susmentionnées. Ce procédé de montage comprend les étapes suivantes :

- assemblage d'un premier boîtier étanche comprenant un premier fluide de refroidissement, le bobinage de stator et/ou le dispositif électronique intégré,
- insertion du premier boîtier assemblé sur le stator, et
- insertion au moins en partie du rotor dans la zone intérieure du stator.

Un tel procédé d'assemblage permet de faciliter le montage et l'entretien de la machine électrique.

Suivant ce procédé de montage, l'étape d'assemblage du premier carter comprend les étapes suivantes :

- installation d'un premier capot de manière étanche sur des parois annulaires radialement interne et externe du premier boîtier,
- disposition du bobinage autour de saillies s'étendant depuis une surface interne du premier capot suivant l'axe de rotation,
- connexion du bobinage de stator avec le dispositif électronique intégré,
- fermeture de manière étanche du premier boîtier avec un deuxième capot,
- injection d'un fluide de refroidissement dans le premier boîtier jusqu'à son remplissage.

**Brève description des figures**

D'autres caractéristiques et avantages de l'invention apparaitront au cours de la lecture de la description détaillée qui va suivre pour la compréhension de laquelle on se reportera aux dessins annexés dans lesquels :

[Fig.1a-1c] La figure 1a est une vue schématique de droite d'un rotor d'une machine électrique selon un mode de réalisation de l'invention pour p=2 ; La figure 1b est une vue schématiques de face d'un rotor d'une machine électrique selon un mode de réalisation de l'invention pour p=2 ; La figure 1c est une vue schématique de gauche d'un rotor d'une machine électrique selon un mode de réalisation de l'invention pour p=2 ;

[Fig.2a-2b] La figure 2a est une vue schématique de droite d'un stator d'une machine électrique selon un mode de réalisation de l'invention ; La figure 2b est une vue schématique de face d'un stator d'une machine électrique selon un mode de réalisation de l'invention ;

[Fig.3a-3b] La figure 3a est une vue schématique de droite d'une bobine d'excitation d'une machine électrique selon un mode de réalisation de l'invention ; La figure 3b est une vue schématique de face d'une bobine d'excitation d'une machine électrique selon un mode de réalisation de l'invention ;

[Fig.4a-4b] La figure 4a est une vue schématique de droite d'une machine électrique selon un mode de réalisation de l'invention ; La figure 4b est une vue schématique de face de la machine électrique illustrée sur la figure 4a ;

[Fig.5-6] La figure 5 illustre un autre mode de réalisation d'une machine électrique comprenant un dispositif électronique intégré à l'intérieur de celle-ci; La figure 6 est une vue arrière du dispositif électronique intégré de la machine électrique représentée sur la figure 5

[Fig.7] La figure 7 est un exemple de réalisation d'un dispositif électronique intégré selon l'invention ;

[Fig.8] La figure 8 est un autre exemple de réalisation d'un dispositif électronique intégré selon l'invention ;

[Fig.9] La figure 9 est un autre exemple de réalisation d'un dispositif électronique intégré selon l'invention ;

[Fig.10] La figure 10 est un autre exemple de réalisation d'un dispositif électronique intégré selon l'invention ;

[Fig.11] La figure 11 est un mode de réalisation d'un stator feuilleté et réalisé en une seule pièce selon l'invention ;

[Fig.12-13] La figure 12 représente une étape de réalisation d'un exemple de stator feuilleté en une seule pièce selon l'invention ; La figure 13 illustre un exemple de bande de tôle ferromagnétique destinée à réaliser un stator feuilleté en une seule pièce selon l'invention ;

[Fig.14] La figure 14 représente un autre mode de réalisation d'une machine électrique comprenant au moins un carter isolant des organes de la machine électrique selon l'invention ;

[Fig.15] La figure 15 est une vue en perspective d'un carter dans lequel sont logés des composants d'une machine électrique tels qu'un dispositif électronique intégré selon l'invention ;

[Fig.16] La figure 16 est une vue en coupe et de détail du carter représenté sur la figure 16 selon l'invention ;

[Fig.17-18] La figure 17 est une vue en coupe axiale d'un autre mode de réalisation d'une machine électrique comprenant un dispositif électronique intégré ; La figure 18 est une vue arrière du dispositif électronique intégré destiné à équiper la machine électrique représentée sur la figure 17 ;

[Fig.19-21] La figure 19 représente de manière schématique et en perspective un carter dans lequel sont logés des composants de la machine électrique tels qu'un rotor selon l'invention ; La figure 20 est une vue de face du carter représenté sur la figure 19 selon l'invention ; La figure 21 est une vue en coupe axiale et de détail du carter destiné à équiper la machine électrique représentée sur la figure 17 selon l'invention.

**Description détaillée de l'invention**

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations. Sur les figures, les échelles et les proportions ne sont pas strictement respectées et ce, à des fins d'illustration et de clarté.

Les figures suivantes décrivent les composants d'une machine électrique synchrone sans balais et sans aimants selon un mode de réalisation de l'invention, configurée pour entrainer en rotation un élément rotatif autour d'un axe de rotation de la machine électrique ou pour générer de l'énergie électrique à partir de l'énergie mécanique transmise par ledit élément rotatif.

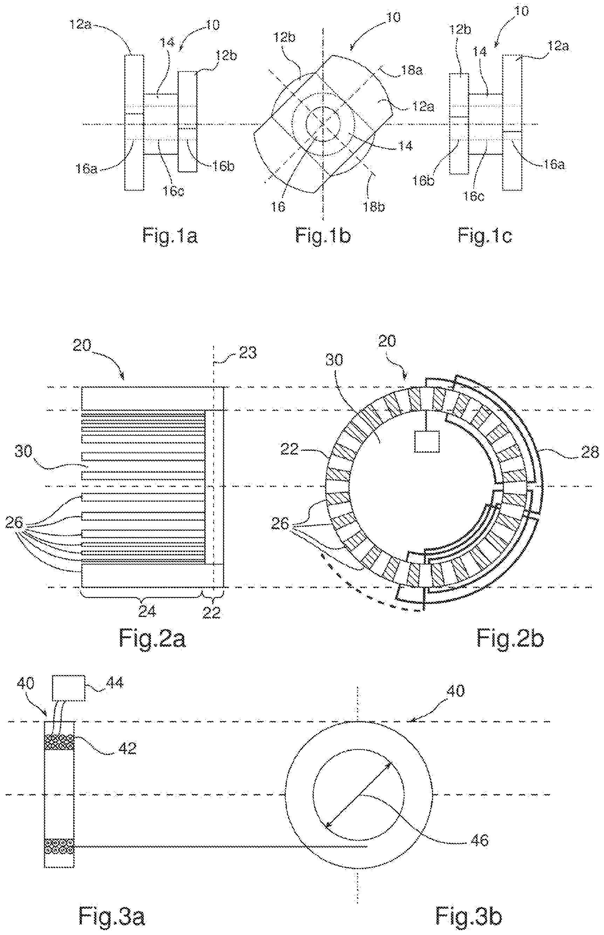

Les figures 1a, 1b et 1c représentent schématiquement un rotor 10 d'une machine électrique selon un mode de réalisation de l'invention, respectivement vu de droite, de face et de gauche.

Le rotor 10 comprend une première partie 12a et une deuxième partie 12b reliées par une partie 14 intermédiaire.

La première partie 12a et la deuxième partie 12b ont la forme d'un cylindre droit ayant pour base un disque tronqué de deux segments formés par des cordes distinctes parallèles et symétriques par rapport au centre du disque. Chaque première et deuxième partie comprend un alésage (respectivement référencés 16a et 16b) autour du centre du disque destiné à recevoir l'élément rotatif.

La partie 14 intermédiaire est un cylindre de révolution comprenant de la même façon un alésage destiné à recevoir l'élément rotatif.

Les trois alésages 16a, 16b et 16c sont ainsi de la même taille et alignés de sorte à former un alésage 16 traversant configuré pour accueillir l'élément rotatif dans le rotor 10.

Comme visible sur la figure 1b, la première partie 12a présente une première direction 18a privilégiée, et la deuxième partie 12b présente une deuxième direction 18b privilégiée. La première direction 18b privilégiée est perpendiculaire à la deuxième direction 18b privilégiée.

La partie 14 intermédiaire s'étend parallèlement à l'axe de rotation.

Les figures 2a et 2b représentent schématiquement un stator 20 d'une machine électrique selon un mode de réalisation de l'invention, respectivement vu de droite et de face.

Le stator 20 comprend un anneau 22 s'étendant selon un plan 23 préférentiel, une denture 24 et un bobinage 28.

La denture 24 comprend une pluralité de dents (dont seule une partie est référencée sous la référence 26 sur les figures pour des raisons de clarté) s'étendant depuis l'anneau 22 parallèlement à l'axe de l'anneau qui sera l'axe de rotation de l'élément rotatif. Le bobinage 28 est représenté en partie sur la figure 2b, et est enroulé autour des dents 26 de la denture. Une seule phase du bobinage est ici représentée, le bobinage pouvant comprendre plusieurs phases de façon connues. De même, l'enroulement autour des dents est représenté à titre d'exemple et d'autres schémas d'enroulement peuvent être utilisés selon les caractéristiques du stator souhaitées.

Les dents de la denture délimitent une zone 30 intérieure du stator, qui forme un cylindre de révolution autour de l'axe de rotation de l'élément rotatif.

Les figures 3a et 3b représentent schématiquement une bobine 40 d'excitation d'une machine électrique selon un mode de réalisation de l'invention, respectivement vue de droite et de face.

La bobine 40 d'excitation prend la forme d'un anneau dans lequel est enroulé le fil 42 conducteur formant la bobine 40 d'excitation. La bobine d'excitation est alimentée par un générateur 44 de courant continu dont la valeur peut être réglable.

Le diamètre 46 intérieur de la bobine 40 d'excitation doit être légèrement supérieur au diamètre extérieur de la partie intermédiaire 14 du rotor afin de permettre l'induction magnétique de celui-ci.

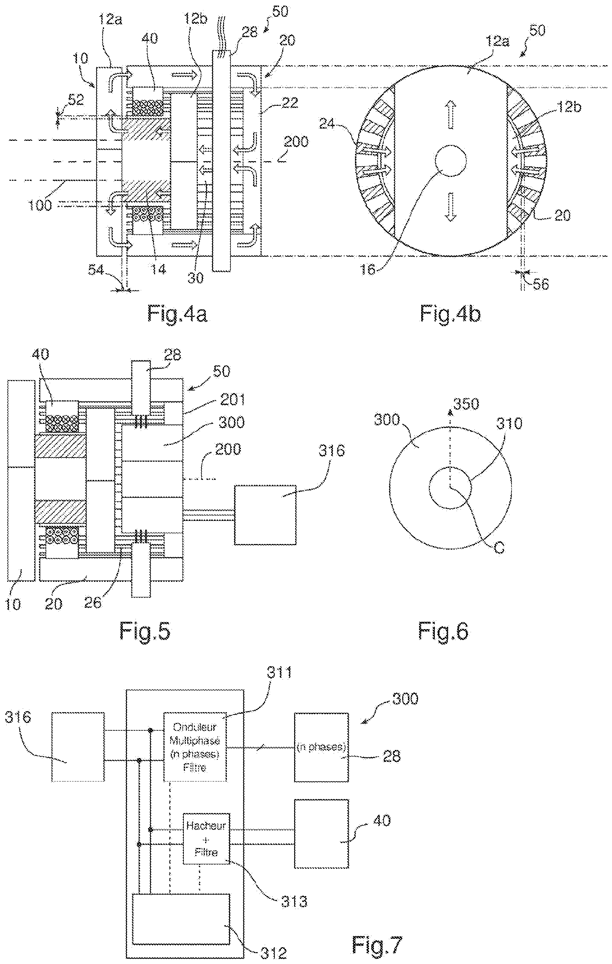

Les figures 4a et 4b représentent schématiquement une machine 50 électrique selon un mode de réalisation de l'invention, respectivement vue de droite et de face. La machine électrique est l'assemblage du rotor 10, du stator 20 et de la bobine 40 d'excitation tels que décrits précédemment.

L'élément 100 rotatif associé à la machine 50 électrique est représenté inséré dans le rotor 10. Il tourne autour de l'axe 200 de rotation.

Dans la machine électrique assemblée, l'axe 200 de rotation est aussi l'axe de rotation du rotor, et l'axe autour duquel sont disposés la bobine 40 d'excitation et le stator 20.

Le bobinage 28 du stator est représenté par un seul élément pour schématiser et est disposé du côté de l'anneau 22 du stator 20.

Le rotor 10 est disposé au moins en partie dans la zone 30 intérieure formée par la denture du stator. Ici, la partie 14 intermédiaire et la deuxième partie 12b sont disposées dans la zone 30 intérieure. Lorsque la machine 50 électrique est en fonctionnement, le stator 20 est fixe et le rotor 10 est en rotation par rapport au stator 20. Un ou plusieurs roulements (non-représentés) disposés entre le rotor 10 et le stator 20 peuvent être utilisés pour maintenir les éléments en place. Alternativement, en fonctionnement générateur, l'élément rotatif maintient le rotor 10 en place dans le stator 20 et aucun roulement n'est nécessaire.

La bobine 40 d'excitation est disposée dans le stator 20 autour de la partie 14 intermédiaire du rotor 10 en laissant un entrefer 52. Lorsqu'elle est alimentée, elle provoque par induction l'apparition d'un flux magnétique continu dans le rotor 10, représenté par des flèches. Le flux électrique continu permet la polarisation du rotor, de sorte à ce que la première partie 12a se comporte comme un pôle magnétique nord et la deuxième partie 12b se comporte comme un pôle magnétique sud. Ainsi, le flux électrique se déplace du pôle sud vers le pôle nord, donc de la deuxième partie 12b du rotor à la première partie 12a du rotor, est transmis axialement par les dentures du stator via l'entrefer 54 entre la première partie 12a et le stator 20. En d'autres termes, le flux électrique circule axialement (suivant l'axe 200 de rotation) dans les dents 26 du stator 20. Le flux magnétique circule ensuite vers le stator.

Du fait de son positionnement au niveau de la partie 14 intermédiaire, la bobine 40 d'excitation n'est pas influencée par les pôles qu'elle crée lors de la rotation desdits pôles.

Comme visible sur la figure 4b, le passage du flux magnétique du stator 20 au pôle sud du rotor, c'est-à-dire la deuxième partie 12b, se fait de façon radiale via l'entrefer 56. Le fait que les directions privilégiées de la première partie 12a et de la deuxième partie 12b soit perpendiculaires permet à ce que les dents de la denture 24 soient alternativement proches d'un pôle puis de l'autre, permettant une circulation des flux du rotor vers le stator ou du stator vers le rotor dans des directions perpendiculaires l'une à l'autre.

Un autre mode de réalisation de cette machine électrique est représenté sur les figures 5 à 10. La machine électrique 50 comprend les composants similaires à ceux de la machine électrique des figures 4a et 4b. Ce mode de réalisation diffère du précédent en ce que la machine électrique comprend en outre un dispositif électronique intégré 300 à l'intérieur de celle-ci.

En particulier, comme nous pouvons le voir sur la figure 5, le dispositif électronique intégré est disposé au moins en partie à l'intérieur du stator 20. Ce dispositif électronique intégré 300 est agencé dans la zone 30 intérieure du stator. Celui-ci est monté suivant l'axe 200 de rotation entre le rotor 10 (en particulier la deuxième partie 12b) et une surface arrière 201 du stator.

En référence à la figure 6, le dispositif électronique intégré 300 présente une forme annulaire d'axe central C. Celui-ci présente un diamètre ou une longueur suivant un axe radial 350 perpendiculaire à l'axe 200 de rotation. La diamètre du dispositif électronique intégré 300 est inférieur au diamètre de la zone 30 intérieure du stator 20. Le dispositif électronique intégré 300 comprend un trou traversant 310 qui traverse celui-ci de part et d'autre suivant l'axe central C. Ce dernier est coaxial avec l'axe 200 de rotation. L'élément 100 est inséré à travers le dispositif électronique intégré 300.

Les figures 7 à 10 illustrent différents agencements du dispositif électronique intégré 300 dans la machine électrique 50.

Sur la figure 7, la machine électrique constitue un moteur électrique synchrone alimenté par une source d'alimentation électrique 316. Dans le présent exemple, il s'agit d'une source d'alimentation électrique continu. Le moteur électrique synchrone permet de fournir un couple nécessaire à l'élément 100 rotatif. Le dispositif électronique intégré comprend un onduleur 311 qui est alimenté par la source d'alimentation électrique continue. L'onduleur permet de fournir de l'énergie électrique au bobinage 28 auquel il est relié. Cet onduleur 311 est multi-phasé. Celui-ci comprend en particulier deux bornes de courant continu couplées à la source d'alimentation électrique 316 et une borne de courant alternatif couplée au bobinage 28.

Le dispositif électrique intégré 300 comprend en outre une unité de contrôle 312 qui est reliée électriquement à l'onduleur 311 et à la source d'alimentation électrique 316 continue. Cette unité de contrôle 312 est configurée de manière que les bonnes consignes soient générées vers l'onduleur et un hacheur décrit ci-après de l'excitation de la machine électrique.
un 'ensemble « redresseur + hacheur + filtre » de l'excitation de la machine électrique.

Le dispositif électronique intégré 300 est complété par un hacheur + filtre 313 qui est alimenté par la source d'alimentation électrique continue par deux bornes de courant continu. Le hacheur 313 est également couplé à la bobine 40 d'excitation du rotor de sorte que cette dernière soit alimentée en courant continu. Le hacheur est également couplé électriquement à l'unité de contrôle 312 par deux bornes.

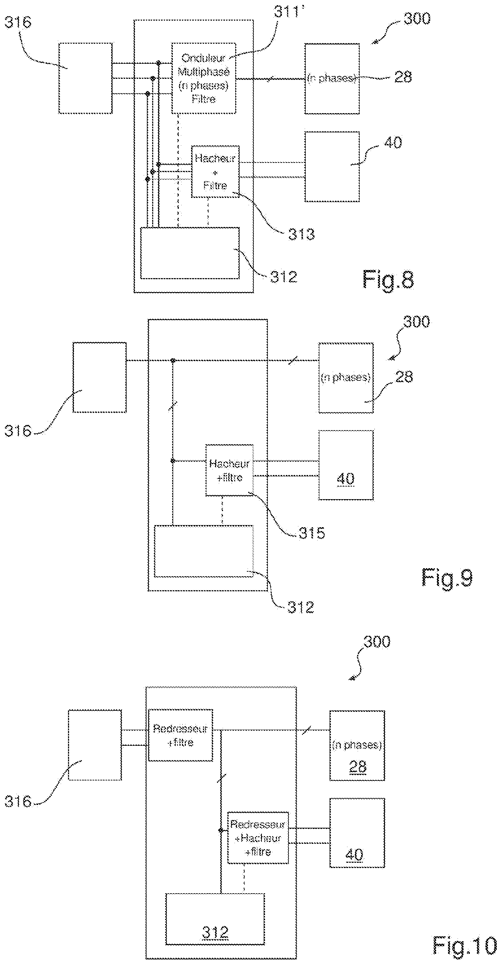

Sur la figure 8, la machine électrique constitue un moteur électrique synchrone alimenté par une source d'alimentation électrique 316, ici alternatif. Le moteur électrique synchrone permet de fournir un couple nécessaire à l'élément 100 rotatif. Le dispositif électronique intégré 300 comprend un onduleur 311, un hacheur + filtre 313 et unité de contrôle 312 qui sont configurés de manière similaire au mode de réalisation précédent. Dans cet exemple de réalisation, le dispositif électronique intégré comprend un redresseur en amont de l'onduleur ainsi qu'un redresseur en amont du hacheur. Le module redresseur et onduleur comprend alors trois bornes de courant alternatif couplées à la source d'alimentation électrique alternatif et une borne de courant alternatif couplé au bobinage 28.

Le module redresseur et hacheur comprend trois bornes de courant alternatif couplées à la source d'alimentation électrique et deux borne de courant continu couplé au bobine 40 d'excitation du rotor de sorte que cette dernière soit alimentée en courant continu. Ce module est également couplé électriquement à l'unité de contrôle 312.

L'unité de contrôle 312 génère les consignes de pilotage de l'onduleur et du hacheur pour assurer le bon fonctionnement de la machine..

Sur la figure 9, la machine électrique constitue un générateur délivrant un courant multi-phasé alternatif. Le dispositif électronique intégré 300 comprend un ensemble 315 redresseur +hacheur + filtre. Le hacheur est alimenté par la source d'alimentation électrique 316 ici alternatif et couplé à la bobine 40 d'excitation. Pour cela, l'ensemble + redresseur + hacheur comprend une borne de courant couplée à la source d'alimentation électrique alternatif et deux bornes de courant couplées à la bobine 40 d'excitation.

Le dispositif électrique intégré 300 comprend en outre l'unité de contrôle 312 qui est reliée électriquement au redresseur+hacheur+filtre 315 et à la source d'alimentation électrique alternatif générée par le générateur. Cette unité de contrôle 312 est configurée de manière à piloter le hacheur pour que l'excitation de la génératrice soit adaptée au bon fonctionnement.

La figure 10 représente une machine électrique 50 constituant un générateur à courant continu. Cet exemple de réalisation est comparable au système de la figure 9, avec un redresseur qui transforme l'alternatif en continu vers le réseau.

Dans le cas d'une machine électrique alimentée par une source d'alimentation alternatif, le flux électrique alternatif circule axialement (suivant l'axe 200 de rotation) dans les dents 26 du stator 20. De même, le flux électrique alternatif circule circonférentiellement dans le stator 20 (en particulier l'anneau 22) autour de l'axe 200 de rotation. Le flux magnétique circule ensuite vers le stator.

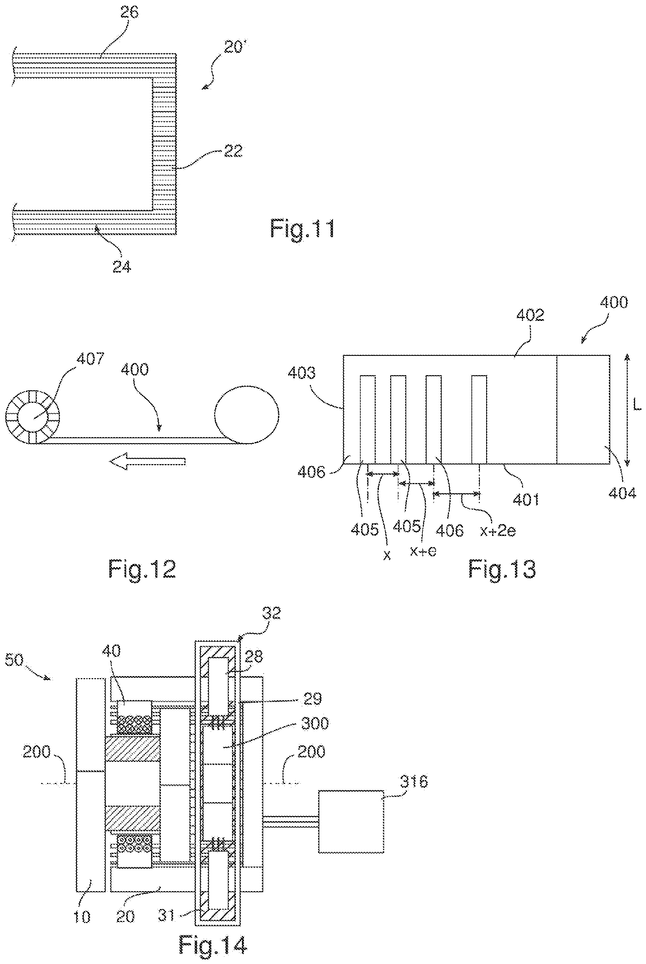

Pour limiter les pertes de courant de Foucault, le stator 20' illustré sur la figure 11 est feuilleté et est réalisé en une seule pièce. En d'autres termes, le stator feuilleté est monobloc. Le fait de réaliser le stator en une seule pièce permet de minimiser les coûts de fabrication de celui-ci. En effet, une seule bande de tôle est nécessaire pour la réalisation de ce stator et un nombre d'étape limité comme nous le verrons dans la suite de la description.

Dans un premier mode de réalisation de ce stator 20' feuilleté illustré sur la figure 11, chaque dent 26 comporte une pluralité de feuilles de tôle ferromagnétique disposées, les unes au-dessus des autres, suivant un axe radial perpendiculaire à l'axe de l'anneau (ici l'axe 200 de rotation). L'anneau 22 du stator 20' comporte également une pluralité de feuilles de tôle ferromagnétique qui sont disposées suivant l'axe 200 de rotation.

Le stator 20' feuilleté en une seule pièce est réalisé suivant un procédé illustré en partie sur les figures 12 et 13. Le procédé comprend la fourniture d'une unique bande de tôle ferromagnétique 400. Cette dernière présente largeur L prédéterminée suivant une première direction. Cette première direction est parallèle à l'axe 200 de rotation dans un état installé du stator dans la machine électrique. La bande de tôle 400 est avantageusement plane. La largeur L est mesurée entre un premier côté 401 et un deuxième côté 402 de la bande de tôle ferromagnétique. Les premier et deuxième côté 401, 402 sont opposés suivant la première direction et sont parallèles. La bande de tôle ferromagnétique 400 comprend également un premier bord 403 et un deuxième bord 404 opposés suivant une deuxième direction. Cette deuxième direction est ici perpendiculaire à la première direction.

Plusieurs encoches 405 sont réalisées par découpure dans la bande de tôle ferromagnétique 400 de manière à former des pattes 406. Chaque patte 406 est définie par deux encoches de part et d'autre de celle-ci suivant la deuxième direction. Ces dernières sont destinées à former les dents 26 du stator. Les encoches 405 sont disposées suivant la deuxième direction. Chaque encoche 405 s'étend depuis le premier côté 406 suivant la première direction et présente une largeur inférieure à celle de la bande de tôle ferromagnétique. La partie de la bande de tôle non découpée permet de former l'anneau du stator.

La bande de tôle ferromagnétique 400 est ensuite enroulée autour d'un axe d'enroulement 407 de manière que les pattes 406 se superposent les une au-dessus des autres radialement par rapport à cet axe d'enroulement. L'axe d'enroulement est perpendiculaire à la deuxième direction et est coaxial à l'axe 200 de rotation dans une situation d'installation dans la machine électrique.

Nous obtenons alors un stator formé de plusieurs feuilles de cette bande de tôle ferromagnétique.

Suivant ce mode de réalisation, l'écart ou la distance entre chaque encoche successive est définie par la formule

[Math 1]

$$X + n.e$$

où X est la première distance de la première encoche,

n est un nombre entier allant de 0 à K-2 et K correspond au nombre d'encoches.

Le calcul de e se fait en considérant que l'empilement ou la superposition des pattes de la bande de tôle ferromagnétique obtenue est une spirale d'Archimède dont le pas e est égal à l'épaisseur de la bande de tôle ferromagnétique. Son équation polaire est donc exprimée par la formule suivante :

[Math 2]

$$R(\theta) = \left(\frac{e}{2p}\right).\theta + R_i$$

où Ri est le rayon interne du stator.

Il est bien entendu possible de réaliser les encoches après enroulage de la bande de tôle ferromagnétique pour former le stator feuilleté.

Les encoches sont réalisées par tout type d'outil adéquat par exemple à l'aide d'un fil.

Avec un tel procédé de réalisation, il n'y a pas de défaut de géométrie dans le stator.

La figure 14 représente un autre mode de réalisation d'une machine électrique 50 avec un dispositif électronique intégré 300 qui sont refroidis efficacement dans le but d'améliorer la performance de la machine électrique. Comme nous l'avons vu dans le mode de réalisation de la figure 5, le dispositif électronique intégré est installé à l'intérieur du stator. Dans cet exemple de réalisation, la machine électrique 50 comprend un premier boîtier 29 dans lequel est/sont installé(s) le bobinage 28 de stator et/ou le dispositif électronique intégré 300.

Comme nous pouvons le voir sur la figure 14, le bobinage 28 et le dispositif électronique intégré sont agencés à l'intérieur du premier boîtier 29. Ce premier boîtier 29 étanche comprend un fluide de refroidissement 31. L'agencement du premier boîtier rempli d'un fluide de refroidissement est possible du fait que le bobinage 28 se trouve à distance d'au moins l'entrefer 52. Ce premier boîtier permet d'isoler le bobinage 28 et le dispositif électronique intégré 300 des autres composants de la machine électronique 50.

Suivant une caractéristique avantageuse, mais non limitative, le fluide de refroidissement 31 est alimenté par une source extérieure de sorte à faire circuler le fluide dans le premier boîtier. Dans ce cas, la surface extérieure 32 du premier boîtier 29 peut faire office d'un échangeur de chaleur. Bien entendu, il n'est pas nécessaire de faire circuler le fluide à l'intérieur du premier boîtier.

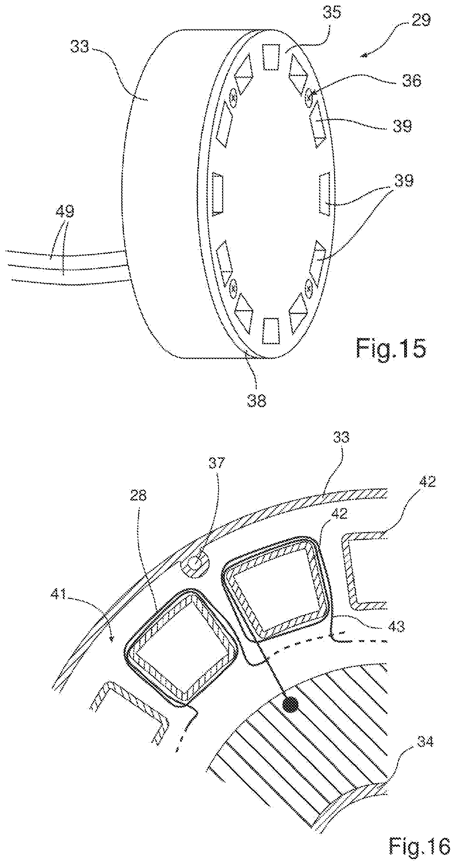

En référence aux figures 15 et 16, le premier boîtier 29 comprend une paroi radialement interne 33 et une paroi radialement externe 44 qui sont annulaires et qui sont coaxiales avec l'axe 200 de rotation. Le premier boîtier 29 comprend également un premier capot 35 et un deuxième capot (non représenté) ayant chacun la forme d'un disque et destiné à fermer en amont et en aval respectivement, suivant l'axe 200 de rotation, le premier boîtier29. Des moyens de fixation 36 tels que des vis permettent de fixer les premier et deuxième capots 35 sur les parois radialement interne et externe 33, 35. A cet effet, au moins la paroi radialement externe 33 comprend des orifices 37 (figure 16) permettant de recevoir les moyens de fixation. Un autre agencement et fixation sont bien entendu possibles.

Des joints d'étanchéité 38 sont agencés entre chaque premier et deuxième capots 35 et les parois radialement interne et externe pour que le premier boîtier soit étanche.

Le premier capot et le deuxième capot comprennent chacun des lumières 39 traversant leur paroi de part et d'autre suivant l'axe 200 de rotation. Les lumières 39 sont réparties régulièrement et suivant une direction circonférentielle.

Le deuxième capot comprend des passage de câbles d'alimentation 49 du dispositif électronique intégré 300.

Dans cet exemple de réalisation, le premier boîtier 29 comprend un diamètre externe qui est supérieur à celui du stator. Le premier boîtier comprend un diamètre interne (défini par la paroi radialement interne) qui est supérieur à celui de l'élément 100 rotatif.

Avantageusement, le fluide de refroidissement 31 comprend une huile laquelle permet d'amortir efficacement les vibrations qui peuvent être néfastes pour les connections par exemple par soudure des éléments composant le dispositif électronique intégré 300.

Avantageusement, le remplissage à l'huile de ce boitier permet de prévenir le feu lié à un défaut électrique.

Suivant une variante de réalisation non représentée, la bobine 40 d'excitation est agencée également dans un deuxième boîtier qui est rempli d'un deuxième fluide de refroidissement. Ce deuxième fluide de refroidissement peut être une huile également.

Suivant un exemple de procédé de montage de la machine électronique 50 illustré sur la figure 14, le premier boîtier 29 est inséré sur le stator 20, 20'. Préalablement à cet étape de montage, le bobinage 28 et le dispositif électronique 300 sont montés dans le premier boîtier. Le bobinage 28 est préformé à l'avance, c'est-à-dire avant que celui-ci soit monté dans la machine électrique 50.

Pour cela, les parois annulaires radialement interne et externe 33, 34 et le premier capot 35 sont assemblés de manière étanche. Les parois radialement interne et externe s'étendent depuis une face interne 41 du premier capot.

Le bobinage 28 est disposé respectivement autour de plusieurs saillies 42 s'étendant depuis la face interne 41 du premier capot suivant l'axe 200 de rotation. Ces saillies 42 présentent ici chacune une section rectangulaire. Le bobinage 28 est ensuite connecté au dispositif électrique intégré 300 par des bornes de courant 43. Ensuite, le deuxième capot est monté de manière à fermer le premier boîtier avec étanchéité.

Le fluide de refroidissement (ici de l'huile) est ensuite injecté à l'intérieur du premier boîtier 29.

Après insertion du premier capot sur le stator, le premier capot du premier boîtier est avantageusement, mais non limitativement en contact avec l'anneau 22 du stator 20, 20'.

A cet effet, les dents 26 du stator s'insèrent dans les lumières 39 des premier et deuxième capots.

La bobine 40 d'excitation est montée autour du rotor 10 puis ce dernier est inséré au moins en partie dans la zone 30 intérieure du stator 20, 20'.

Dans le cas où la bobine 40 d'excitation est agencée à l'intérieur du deuxième boîtier selon une variante de réalisation de la machine électrique, le deuxième boîtier est d'abord inséré autour de la partie intermédiaire 14. Le rotor 10 équipé du deuxième boîtier est ensuite inséré dans le stator 20.

Le deuxième boîtier comprenant la bobine 40 d'excitation est configuré de manière similaire au premier boîtier.

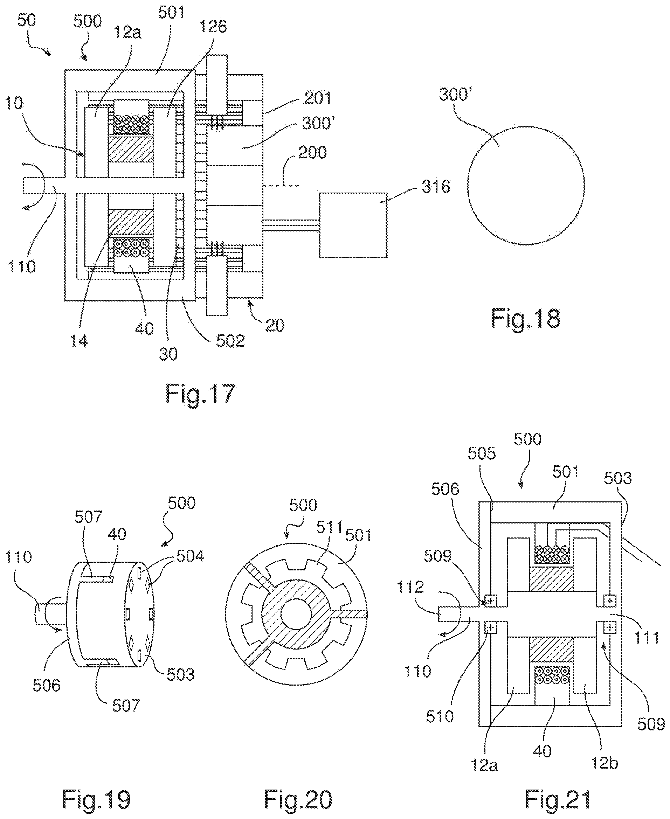

Un autre mode de réalisation est illustré sur les figures 17 à 21 dans lequel la machine électrique comprend un dispositif électronique intégré 300'.

Dans cet exemple de réalisation, la machine électrique est complétée par un module de rotor 500 comprenant au moins un carter 501, un arbre d'entraînement 110, une bobine 40 d'excitation et un circuit magnétique du rotor. En particulier, le carter 501 comprend une paroi annulaire 502 s'étendant (suivant l'axe 200 de rotation) depuis un fond 503. Ce dernier comprend une pluralité d'orifices 504 traversant la paroi du fond de part et d'autre suivant l'axe 200 de rotation. Ces orifices 504 sont répartis régulièrement et suivant une direction circonférentielle. Chaque orifice 504 est destiné à recevoir une dent 26 du stator. La bordure 505 de la paroi annulaire 502 délimite une ouverture laquelle est obturée par un flasque 506.

Suivant un exemple de réalisation, la paroi annulaire 501 comprend des fentes 507 qui s'étendent depuis la bordure 505 dans la paroi annulaire. Les fentes 507 sont disposées suivant la circonférence de la paroi annulaire.

L'arbre d'entrainement 110 s'étend suivant l'axe 200 de rotation et entre le flasque 506 et le fond 503. Comme nous pouvons le voir en particulier sur la figure 21, l'arbre d'entraînement 110 ne s'étend pas au-delà du fond 503 du carter 501. Plus précisément encore, l'arbre d'entraînement 110 comprend un première extrémité 111 qui est couplée au fond du carter et une deuxième extrémité 112 (opposée axialement à la première extrémité) qui traverse le flasque 506 et qui s'étend à l'extérieur du carter.

L'arbre 110 est monté en rotation à l'intérieur du carter. Pour cela des paliers de guidage 509 en rotation sont montés en amont et en aval de l'arbre d'entraînement et à l'intérieur du carter. Les paliers de guidage 509 en rotation comprennent dans cet exemple, des roulements avec des billes 510.

Cet arbre d'entraînement est destiné à être couplé à l'élément rotatif 100. Un tel agencement permet de libérer de la place pour le dispositif électronique intégré 300'. Plus précisément, le dispositif électronique intégré est plein. En d'autres termes, celui-ci ne comprend pas de trou traversant 310 comme c'est le cas du mode de réalisation de la figure 6.

Le dispositif électronique intégré 300' est agencé axialement entre le fond 503 du carter et la face arrière 201 du stator 20, 20'.

Le rotor 10 est monté dans le carter 501 et autour de l'arbre d'entraînement 110.

Sur cette figure, nous pouvons voir que la longueur maximale de la première partie 12a du rotor est inférieure au diamètre de la zone 30 intérieure du stator 20, 20' et que la première partie 12a du rotor est disposée dans la zone 30 intérieure du stator. En d'autres termes, l'intégralité du rotor 10 est disposée dans la zone 30 intérieure du stator. Les deux successions de pôles magnétiques du rotor sont positionnés radialement par rapport au circuit magnétique formé par le stator.

La bobine d'excitation 40 est agencée autour de la partie intermédiaire 14.

Par ailleurs, le module de rotor comprend des rainures ou logements destinés à recevoir chacun au moins en partie l'extrémité libre de dents du stator. En particulier, la paroi radialement interne du carter 501 comprend une pluralité de rainures 511 ou logements s'étendant suivant le sens l'axe 200 et réparties régulièrement autour de cet axe. Ces rainures permettent de recevoir les dents du stator afin de les immobiliser. Cela permet de raidir l'ensemble. Alternativement, le flasque 506 comprend des logements régulièrement répartis circonférentiellement autour de l'axe 200. Cela permet d'emprisonner au moins l'extrémité libre des dents du stator de manière à raidir l'ensemble.

**Revendications**

1. Machine électrique (50) synchrone, configurée pour entrainer en rotation un élément (100) rotatif autour d'un axe (200) de rotation de la machine électrique ou pour générer de l'énergie électrique à partir de l'énergie mécanique transmise par ledit élément (100) rotatif, comprenant :

   - un stator (20, 20') disposé autour de l'axe (200) de rotation de la machine électrique, comprenant un anneau (22) s'étendant selon un plan (23) préférentiel perpendiculaire audit axe de rotation et comprenant un bobinage (28) et une denture (24) comprenant des dents (26) s'étendant parallèlement à l'axe de rotation à partir de l'anneau (22), ledit bobinage étant enroulé autour de la denture (24) selon le plan préférentiel et la denture (24) délimitant une zone (30) intérieure du stator autour de l'axe de rotation,
   - un rotor (10), comprenant une première partie (12a) s'étendant selon p premières directions (18a) privilégiées parallèles au plan préférentiel, une deuxième partie (12b) s'étendant selon p deuxièmes directions (18b) privilégiées décalées angulairement de $\pi/p$ par rapport aux premières directions privilégiées de la première partie (18a) et parallèles au plan préférentiel, et une partie (14) intermédiaire reliant la première partie (12a) à la deuxième partie (12b), le rotor étant disposé de sorte à ce qu'au moins la deuxième partie (12b) et la partie (14) intermédiaire, s'étendant parallèlement à l'axe (200) de rotation, soient dans la zone (30) intérieure du stator et de sorte à ce que la deuxième partie (12b) se trouve du côté de l'anneau (22), et
   - une bobine (40) d'excitation du rotor, fixe par rapport au stator, alimentée par un courant électrique continu, disposée autour de la partie (14) intermédiaire du rotor et configurée pour générer un flux magnétique dans le rotor (10) par induction magnétique, de sorte que la première partie (12a) du rotor constitue p pôles magnétiques nord du rotor et la deuxième partie (12b) du rotor constitue p pôles magnétiques sud du rotor.

2. Machine électrique (50) selon la revendication 1, **caractérisée en ce qu'**elle comprend un dispositif électronique intégré (300, 300') qui est disposé à l'intérieur du stator (20, 20').

3. Machine électrique (50) suivant l'une quelconque des revendications précédentes, **caractérisée en ce que** le dispositif électronique intégré (300, 300') est agencé dans la zone (30) intérieure du stator (20, 20'), et entre le rotor (10) et une face arrière (210) de l'anneau (22) du stator (20, 20') suivant l'axe (200) de rotation.

4. Machine électrique (50) selon l'une quelconque des revendications précédentes, **caractérisée en ce que** le stator (20') est feuilleté et est formé d'une seule pièce.

5. Machine électrique (50) selon l'une quelconque des revendications 2 à 4, **caractérisée en ce qu'**elle comprend un premier boîtier (29) comprenant un premier fluide de refroidissement (31) et dans lequel est/sont installé(s) le bobinage (28) de stator (20, 20') et/ou le dispositif électronique intégré (300, 300').

6. Machine électrique (50) selon l'une quelconque des revendications 2 à 5, **caractérisée en ce qu'**elle comprend un deuxième boîtier comprenant un deuxième fluide de refroidissement, la bobine (40) d'excitation étant agencée à l'intérieur de ce deuxième boîtier.

7. Machine électrique (50) selon l'une quelconque des revendications 1 à 5, **caractérisé en ce qu'**elle comprend un carter (501) dans lequel sont logés au moins le rotor (10), la bobine (40) d'excitation montée autour de la partie intermédiaire (14) du rotor (10) et un arbre d'entraînement (110) s'étendant suivant l'axe (200) de rotation, l'arbre d'entraînement (110) comprenant une première extrémité (111) qui est couplée à un fond (503) du carter (501).

8. Procédé de réalisation d'un stator (20') d'une machine électrique (50) suivant l'une quelconque des revendications précédentes, le procédé étant **caractérisé en ce qu'**il comprend les étapes suivantes :

- fourniture d'une bande de tôle ferromagnétique (400) comprenant une largeur L prédéterminée suivant une première direction, la largeur L étant mesurée entre un premier côté (401) et un deuxième côté (402) de la bande de tôle ferromagnétique,
- réalisation d'une pluralité d'encoches (405) par découpure de manière à former des pattes (406), et
- enroulage de la bande de tôle ferromagnétique (400) autour d'un axe d'enroulement (407) de sorte que plusieurs pattes (406) soit superposées suivant un axe radial perpendiculaire à l'axe d'enroulement.

9. Procédé de réalisation d'un stator selon la revendication précédente, **caractérisé en ce que** l'écart entre chaque encoche (405) successive est définie par la formule :

[Math 1]

$$X + n.e$$

où X est la distance de la première encoche, n est un nombre entier allant de 0 à K-2, K correspond au nombre d'encoches et e est égal à l'épaisseur de la bande de tôle ferromagnétique.

10. Procédé de réalisation d'un stator selon la revendication précédente, **caractérisé en ce que** e est déterminé par un enroulement ou empilement des pattes suivant une spirale d'Archimède et est calculé suivant la formule

[Math 2]

$$R(\theta) = \left(\frac{e}{2p}\right).\theta + R_i$$

avec $R(\theta)$ étant le rayon de la spirale, p étant un pôle magnétique nord et un pôle magnétique sud, et Ri étant le rayon interne du stator.

11. Procédé de montage d'une machine électrique selon l'une quelconque des revendications 1 à 7, **caractérisé en ce qu'**il comprend les étapes suivantes :

- assemblage d'un premier boîtier (29) étanche comprenant un premier fluide de refroidissement (29), le bobinage (28) de stator et/ou le dispositif électronique intégré (300, 300'),
- insertion du premier boîtier assemblé sur le stator (20, 20'), et

insertion au moins en partie du rotor (10) dans la zone (30) intérieure du stator (20).

**Patentansprüche**

1. Elektrische Synchronmaschine (50), die konfiguriert ist, um ein Drehelement (100) um eine Drehachse (200) der elektrischen Maschine in Drehung zu versetzen oder um ausgehend von mechanischer Energie, die von dem Drehelement (100) übertragen wird, elektrische Energie zu erzeugen, umfassend:

- einen Stator (20, 20'), der um die Drehachse (200) der elektrischen Maschine angeordnet ist, umfassend einen Ring (22), der sich in einer bevorzugten Ebene (23) senkrecht zur Drehachse erstreckt und eine Wicklung (28) und eine Verzahnung (24) umfasst, die Zähne (26) umfasst, die sich ausgehend vom Ring (22) parallel zur Drehachse erstrecken, wobei die Wicklung in der bevorzugten Ebene um die Verzahnung (24) herum aufgewickelt ist und die Verzahnung (24) einen Innenbereich (30) des Stators um die Drehachse begrenzt,
- einen Rotor (10), umfassend ein erstes Teil (12a), das sich in p privilegierte erste Richtungen (18a), die parallel zur bevorzugten Ebene sind, erstreckt, ein zweites Teil (12b), das sich in p privilegierte zweite Richtungen (18b), die in Bezug auf die ersten privilegierten Richtungen des ersten Teils (18a) um π/p winklig versetzt und parallel zur bevorzugten Ebene sind, erstreckt, und ein Zwischenteil (14), das den ersten Teil (12a) mit dem zweiten Teil (12b) verbindet, wobei der Rotor derart angeordnet ist, dass zumindest das zweite Teil (12b) und das Zwischenteil (14), die parallel zur Drehachse (200) angeordnet sind, im Innenbereich (30) des Stators gelegen sind und derart, dass sich das zweite Teil (12b) auf der Seite des Rings (22) befindet, und
- eine Spule (40) zum Anregen des Rotors, die in Bezug auf den Stator fest ist, von einem Gleichstrom gespeist wird, um das Zwischenteil (14) des Rotors angeordnet ist und konfiguriert ist, um einen Magnetfluss im Rotor (10) durch Magnetinduktion derart zu erzeugen, dass das erste Teil (12a) des Rotors p magnetische Nordpole des Rotors darstellt und das zweite Teil (12b) des Rotors p magnetische Südpole des Rotors darstellt.

2. Elektrische Maschine (50) nach Anspruch 1, **dadurch gekennzeichnet, dass** sie eine integrierte elektronische Vorrichtung (300, 300') umfasst, die innerhalb des Stators (20, 20') angeordnet ist.

3. Elektrische Maschine (50) nach einem der vorstehenden Ansprüche, **dadurch gekennzeichnet, dass** die integrierte elektronische Vorrichtung (300, 300') im Innenbereich (30) des Stators (20, 20') und zwischen dem Rotor (10) und einer Rückfläche (210) des Rings (22) des Stators (20, 20') entlang der Drehachse (200) eingerichtet ist.

4. Elektrische Maschine (50) nach einem der vorstehenden Ansprüche, **dadurch gekennzeichnet, dass** der Stator (20') laminiert ist und aus einem einzigen Stück gebildet ist.

5. Elektrische Maschine (50) nach einem der Ansprüche 2 bis 4, **dadurch gekennzeichnet, dass** sie ein erstes Gehäuse (29) umfasst, das eine erste Kühlflüssigkeit (31) umfasst, und in dem die Wicklung (28) des Stators (20, 20') und/oder die integrierte elektronische Vorrichtung (300, 300') eingebaut ist/sind.

6. Elektrische Maschine (50) nach einem der Ansprüche 2 bis 5, **dadurch gekennzeichnet, dass** sie ein zweites Gehäuse umfasst, das eine zweite Kühlflüssigkeit umfasst, wobei die Anregungsspule (40) im Inneren dieses zweiten Gehäuses eingerichtet ist.

7. Elektrische Maschine (50) nach einem der Ansprüche 1 bis 5, **dadurch gekennzeichnet, dass** sie einen Kasten (501) umfasst, in dem zumindest der Rotor (10), die um das Zwischenteil (14) des Rotors (10) aufgewickelte Anregungsspule (40) und eine sich entlang der Drehachse (200) erstreckende Antriebswelle (110) aufgenommen sind, wobei die Antriebswelle (110) ein erstes Ende (111) umfasst, das mit einem Boden (503) des Kastens (501) gekoppelt ist.

8. Verfahren zum Herstellen eines Stators (20') einer elektrischen Maschine (50) nach einem der vorstehenden Ansprüche, wobei das Verfahren **dadurch gekennzeichnet ist, dass** es die folgenden Schritte umfasst:

- Bereitstellen eines ferromagnetischen Blechstreifens (400), der eine vorbestimmte Breite L in einer ersten Richtung umfasst, wobei die Breite L zwischen einer ersten Seite (401) und einer zweiten Seite (402) des ferromagnetischen Blechstreifens gemessen wird,
- Erstellen einer Vielzahl von Rasten (405) durch Ausschneiden derart, dass Laschen (406) gebildet werden, und
- Aufwickeln des ferromagnetischen Blechstreifens (400) um eine Wickelachse (407) derart, dass sich mehrere Laschen (406) entlang einer radialen Achse senkrecht zur Wickelachse überlagern.

9. Verfahren zum Herstellen eines Stators nach dem vorstehenden Anspruch, **dadurch gekennzeichnet, dass** der Spalt zwischen jeder nachfolgenden Raste (405) definiert ist durch die Formel:

[Mathe 1]

$$X + n.\,e$$

wobei X der Abstand der ersten Raste ist, n eine ganze Zahl von 0 bis K-2 ist, K der Anzahl von Rasten entspricht und e gleich der Dicke des ferromagnetischen Blechstreifens ist.

10. Verfahren zum Fertigen eines Stators nach dem vorstehenden Anspruch, **dadurch gekennzeichnet, dass** e ermittelt es durch eine Aufwicklung oder Stapelung der Laschen entlang einer archimedischen Spirale bestimmt wird und berechnet wird gemäß der Formel

[Mathe 2]

$$R(\vartheta) = \left(\frac{e}{2p}\right)\vartheta + R_i$$

wobei $R(\vartheta)$ der Radius der Spirale ist, p ein magnetischer Nordpol und ein magnetischer Südpol ist, und Ri der Innenradius des Stators ist.

11. Verfahren zur Montage einer elektrischen Maschine nach einem der Ansprüche 1 bis 7, **dadurch gekennzeichnet, dass** es die folgenden Schritte umfasst:

   - Zusammenfügen eines dichten ersten Gehäuses (29), das eine erste Kühlflüssigkeit (29) umfasst, der Wicklung (28) des Stators und/oder der integrierten elektronischen Vorrichtung (300, 300'),
   - Einsetzen des zuammengefügten ersten Gehäuses an den Stator (20, 20') und zumindest teilweises Einsetzen der Rotors (10) in den Innenbereich (30) des Stators.

**Claims**

1. A synchronous electrical machine (50) configured to drive a rotating element (100) in rotation around an axis (200) of rotation of the electrical machine or to generate electrical energy from the mechanical energy transmitted by said rotating element (100), comprising :

   - a stator (20, 20') disposed around the axis (200) of rotation of the electrical machine, comprising a ring (22) extending along a preferred plane (23) perpendicular to said axis of rotation and comprising a winding (28) and a denture (24) comprising teeth (26) extending parallel to the axis of rotation from the ring (22), said winding being coiled around the denture (24) according to the preferred plane and the denture(24) delimiting an inner zone (30) of the stator around the axis of rotation,
   - a rotor (10), comprising a first portion (12a) extending in p first preferred directions (18a) parallel to the preferred plane, a second portion (12b) extending in p second preferred directions (18b) angularly shifted by $\pi/p$ with respect to the first preferred directions of the first portion (18a) and parallel to the preferred plane, and an intermediate portion (14) linking the first portion (12a) to the second portion (12b), the rotor being arranged in such a way that at least the second portion (12b) and the intermediate portion (14), extending in parallel to the axis (200) of rotation, are in the inner zone (30) of the stator and that the second portion (12b) is located on the side of the ring (22), and
   - an excitation coil (40) for exciting the rotor, fixed with respect to the stator, supplied with DC electric current, positioned around the intermediate portion of the rotor (14) and configured so as to generate a magnetic flux in the rotor (10) through magnetic induction, such that the first portion (12a) of the rotor constitutes p north magnetic poles of the rotor and the second portion (12b) of the rotor constitutes p south magnetic poles of the rotor.

2. The electrical machine (50) according to claim 1, **characterized in that** it comprises an integrated electronic device (300, 300') which is arranged inside the stator (20, 20').

3. The electrical machine (50) according to any one of the preceding claims, **characterized in that** the integrated electronic device (300, 300') is arranged in the inner zone (30) of the stator (20, 20'), and between the rotor (10) and a rear face (210) of the ring (22) of the stator (20, 20') along the axis (200) of rotation.

4. The electrical machine (50) according to any one of the preceding claims, **characterized in that** the stator (20') is laminated and is formed in one piece.

5. The electrical machine (50) according to any one of claims 2 to 4, **characterized in that** it comprises a first housing (29) comprising a first cooling fluid (31) and in which the winding (28) of the stator (20, 20') and/or the integrated electronic device (300, 300') is/are installed.

6. The electrical machine (50) according to any one of claims 2 to 5, **characterized in that** it comprises a second housing comprising a second cooling fluid, the excitation coil (40) being arranged inside this second housing.

7. The electrical machine (50) according to any one of claims 1 to 5, **characterized in that** it comprises a casing (501) in which at least the rotor (10), the excitation coil (40) mounted around the intermediate portion (14) of the rotor (10) and a drive shaft (110) extending along the axis (200) of rotation are accommodated, the drive shaft (110) comprising a first end (111) which is coupled to a bottom (503) of the casing (501).

8. A method of making a stator (20') of an electrical machine (50) according to any one of the preceding claims, the method being **characterized in that** it comprises the following steps:

- providing a strip of ferromagnetic sheet metal (400) comprising a predetermined width L in a first direction, the width L being measured between a first side (401) and a second side (402) of the strip of ferromagnetic sheet metal,
- making a plurality of notches (405) by cutting so as to form tabs (406), and
- coiling the strip of ferromagnetic sheet metal (400) around a coiling axis (407) so that several tabs (406) are superimposed along a radial axis perpendicular to the coiling axis.

9. The method of making a stator according to the preceding claim, **characterized in that** the distance between each successive notch (405) is defined by the formula:

[Math 1].

$$X + n.e$$

wherein X is the distance from the first notch, n is an integer from 0 to K-2, K is the number of notches and e is equal to the thickness of the strip of ferromagnetic sheet metal.

10. The method of making a stator according to the preceding claim, **characterized in that** e is determined by coiling or superimposing the tabs in a spiral of Archimedes and is calculated according to the formula

[Math 2]

$$R(\theta) = \left(\frac{e}{2p}\right).\theta + R_i$$

with R($\theta$) being the radius of the spiral, p being a north magnetic pole and a south magnetic pole, and Ri being the inner radius of the stator.

11. The method of assembling an electrical machine according to any one of claims 1 to 7, **characterized in that** it comprises the following steps:

- assembling a first sealed housing (29) comprising a first cooling fluid (29), the stator winding (28) and/or the integrated electronic device (300, 300'),
- inserting the first housing assembled on the stator (20, 20'), and
- inserting at least partially inserting the rotor (10) in the inner zone (30) of the stator (20).

Fig.1a  Fig.1b  Fig.1c

Fig.2a  Fig.2b

Fig.3a  Fig.3b

Fig.4a

Fig.4b

Fig.5

Fig.6

Onduleur
Multiphasé
(n phases)
Filtre

(n phases)

Hacheur
+
Filtre

Fig.7

EP 3 782 270 B1

316      311'      300

Onduleur
Multiphasé
(n phases)
Filtre

(n phases) — 28

40

Hacheur
+
Filtre

313

312     Fig.8

300

316

(n phases) — 28

Hacheur
+filtre

40

315

312     Fig.9

300

Redresseur
+filtre

316

(n phases)
28

Redresseur
+Hacheur
+filtre

40

312     Fig.10

18

Fig.11

Fig.12

Fig.13

Fig.14

Fig.15

Fig.16

**Fig.17**

**Fig.18**

**Fig.19**

**Fig.20**

**Fig.21**

**EP 3 782 270 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012085438 A2
- US 3473061 A
- WO 2016138159 A1
- DE 19547016 A1
- FR 2406333 A1